# FASCICULE DE BREVET EUROPEEN

(11) **EP 0 894 079 B1**
(45) Date de publication et mention de la délivrance du brevet: **06.02.2002**
(21) Numéro de dépôt: 97918232.6
(22) Date de dépôt: 15.04.1997
(51) Int. Cl.: C03C 17/00, B05B 5/08

(54) **PROCEDE D'APPLICATION DE PRODUITS A L'EAU, NOTAMMENT DE PEINTURES ET/OU VERNIS A L'EAU SUR DES ARTICLES EN VERRE**
VERFAHREN ZUR BESCHICHTUNG MIT WÄSSERIGEN PRODUKTEN, INSBESONDERE MIT WÄSSERIGEN LACKEN UND/ODER ANSTRICHMITTEL AUF GLASGEGENSTANDE
PROCESS FOR APPLYING WATER-BASED PRODUCTS SUCH AS PAINTS AND VARNISHES TO GLASS OBJECTS

(30) Priorité: 16.04.1996 FR 9604743
(43) Date de publication de la demande: 03.02.1999
(73) Titulaire: Société Autonome de Verreries SAVERGLASS, 60960 Feuquieres (FR)
(72) Inventeur: LOURMAN, Didier, F-60380 Songeons (FR)
(74) Mandataire: Ballot, Paul Denis Jacques
(86) Numéro de dépôt international: FR9700675
(87) Numéro de publication internationale: WO9738946

(56) Documents cités:
- EP-A- 0 560 199
- WO-A-95/17263
- DE-A- 2 450 260
- DE-A- 2 517 504
- FR-A- 2 315 323

## Description

La présente invention se rapporte à un procédé d'application de produits à l'eau, notamment de peintures et/ou vernis à l'eau, à la surface d'articles en verre. Ce procédé permet d'obtenir divers aspects tels qu'un aspect de coloration du verre dans la masse, un aspect de satinage chimique ou encore d'émaillage. Il est notamment destiné à la décoration de pots, de flacons, de bouteilles ou de carafes en tout genre.

Les procédés classiques d'application de vernis sur des articles en verre consistent à pulvériser les produits sur leurs parois à l'aide d'une batterie plus ou moins complexe de pistolets pneumatiques. La mise en oeuvre de ces procédés implique toutefois de nombreux problèmes et les résultats obtenus ne sont pas satisfaisants.

Les rendements de dépôt sont généralement inférieurs à 50%. Ces rendements sont d'autant plus faibles que la forme des articles est complexe, cette dernière déterminant le nombre de pistolets nécessaires à l'obtention d'un dépôt homogène à la surface des articles. Or, plus le nombre de pistolets augmente, plus les réglages des paramètres relatifs à ces pistolets dans une unité de fabrication sont complexes. Ces réglages peuvent en effet durer plusieurs heures et il est nécessaire de mémoriser non seulement la position dans l'espace de chacun des pistolets, mais aussi leurs caractéristiques de fonctionnement (pression d'air de pulvérisation, pression de produit, diamètre de buse, pression de cornes, type de chapeau...) afin d'assurer une bonne reproductibilité des procédés dans le temps.

Malgré le nombre important de pistolets que l'on peut utiliser et les réglages fastidieux qu'il faut exécuter, la forme de certains articles est telle que des zones restent encore difficilement accessibles au produit pulvérisé, voire même inaccessibles.

Par ailleurs, un dépôt homogène de peintures et/ou vernis à l'eau, comportant de très fines particules de résine en suspension dans de l'eau est particulièrement difficile à réaliser. L'eau est notamment un solvant très difficile à atomiser, et les pistolets pneumatiques ne parviennent pas à disperser des particules de tailles homogènes. Les particules émises par les pistolets sont en effet grossières dans l'axe de projection et de plus en plus fines de part et d'autre de cet axe. Cette disparité de la taille des particules de produit a pour conséquence de produire des phénomènes nuisibles à l'obtention d'un dépôt de bonne qualité. Ainsi, les particules de vernis les plus fines ont tendance à sécher avant d'atteindre le substrat verrier, ou même de sécher trop vite sur celui-ci, ce qui provoque des effets localisés de poudrage, de mouchetures et de piqûres à la surface des articles traités. D'autre part, les particules de vernis les plus grossières sèchent difficilement après leur projection sur la surface des articles, si bien que des effets de peau d'orange, de coulures et de surépaisseurs locales apparaissent, dégradant alors la qualité du revêtement des articles traités.

Une première solution pour remédier à tous ces inconvénients consiste à augmenter de manière excessive la pression d'air de pulvérisation. Mais cette solution ne peut être envisagée sérieusement car elle ne permet pas d'améliorer de manière significative la qualité du revêtement et elle implique de surcroît une forte baisse du rendement de pulvérisation qui est pourtant déjà très faible.

Le procédé selon la présente invention permet de résoudre tous ces problèmes de mise en oeuvre et d'obtenir des articles présentant un revêtement de très bonne qualité. Il consiste pour cela à :
- charger une composition de produits à l'eau à un potentiel d'une polarité donnée, et maintenir leur surface à une température comprise entre 15°C et 30°C,
- atomiser la composition de ce produit à l'eau et diffuser les particules résultantes dans une large zone de manière à former un brouillard (120, 121),
- placer les articles en verre (200) au contact d'une électrode à un potentiel d'une autre polarité donnée et maintenir leur surface à une température comprise entre 15°C et 30°C.
- et amener les articles en verre dans le champ de ce brouillard.

De cette manière les particules se répartissent de façon homogène sur les surfaces desdits articles grâce à un champ électrique résultant de ces différentes polarités. Sous l'effet de l'attraction électrostatique, des particules chargées atteignent la surface vitreuse. On observe en effet que cette surface se porte, par une conduction naturelle du verre, au potentiel de l'électrode. La conduction de surface du verre est connue pour être très faible, mais cette conduction est suffisante pour permettre la création d'une surface équipotentielle sur toute la surface d'un article en verre. Cette conduction est due à une réaction de l'humidité de l'air avec la surface du verre. On observe en particulier que les particules du brouillard subissent une attraction significative de la part de ces articles dans la mesure où, même avant que les articles ne pénètrent dans le champ de ce brouillard, ils commencent à se couvrir de particules de peinture ou de vernis.

Par ailleurs, avec les distances mises en jeu la répartition des lignes du champ électrique est telle que la distribution de ces lignes est homogène et partant de là, la distribution du produit à l'eau est sensiblement uniforme en densité sur la surface des articles en verre.

Dans les produits à l'eau on comprend les trois types suivants, qui diffèrent par la dimension des particules de matériau en suspension dans l'eau :
- les produits à l'eau hydroémulsionnés (taille des particules comprise entre 0,1 et 1 micron),
- les produits à l'eau hydrodispersés (taille des particules comprise entre 0,01 et 0,1 micron),
- les produits à l'eau hydrosolubles (taille des particules inférieure à 0,01 micron).

La solubilisation des particules ainsi que la stabilité de tels produits est obtenue grâce à l'adjonction d'un mélange de co-solvants, comportant une amine ionisable, des alcools et des glycols. Généralement, le taux de tels co-solvants organiques est inférieur à 10% en masse. De préférence, la composition de produit à l'eau utilisé dans le procédé selon l'invention est un mélange de produits hydrosolubles et de produits hydroémulsionnés, à des proportions conférant au film réticulé résultant un compromis de propriétés mécaniques, de brillance et de tendu. Le taux de co-solvants de tels produits est inférieur à 5% en masse, la teneur en extrait sec est comprise entre 30 et 50% en masse et la quantité d'eau est comprise entre 45 et 70% en masse. L'utilisation de tels produits à l'eau, comprenant un faible taux de co-solvants organiques, constitue un très grand avantage pour le respect de l'environnement.

Selon une variante de réalisation, un autre produit à l'eau peut également être avantageusement utilisé. Il s'agit d'une poudre d'émail dispersée dans de l'eau.

L'utilisation de produits à l'eau procure un très gros intérêt non seulement sur le plan de l'écologie, mais aussi sur le plan mécanique. En effet, leurs duretés superficielles élevées les rend moins rayables.

L'atomisation préférée de la composition d'un produit à l'eau, de produit hydroémulsionné dans un exemple, est réalisée au moyen d'au moins un atomiseur électrostatique à bol tournant fixé sur un appareil séquentiel à va-et-vient vertical. De préférence on met en jeu deux atomiseurs lorsque les articles à recouvrir présentent des reliefs fins propices à la canalisation des produits appliqués, c'est-à-dire propices aux coulures, ou plus généralement pour l'obtention de films homogènes et tendus, quelle que soient leurs épaisseurs.

De manière avantageuse, l'addition d'un atomiseur supplémentaire permet d'effectuer le recouvrement des articles en deux temps, c'est-à-dire en "mouillé sur mouillé", de manière à ce que les particules se déposent, se lient et sèchent progressivement sur le substrat verrier. Cette configuration a en outre l'avantage de produire, par l'intermédiaire du premier atomiseur, une première couche humide garante, de par ses propriétés de surface, de l'accrochage d'une deuxième couche humide réalisée par le deuxième atomiseur. Les atomiseurs électrostatiques à bol tournant sont alors décalés sur le passage des articles. A vitesse donnée de défilement des articles, on laisse ainsi passer suffisamment de temps entre la présentation d'un article devant un premier atomiseur et sa présentation devant un deuxième atomiseur (ou éventuellement un troisième etc...). On a donc trouvé dans l'invention qu'il existait pour tout matériau à l'eau un compromis efficace entre sa viscosité, la taille et la densité en particules de la zone active, et la durée du passage d'un article dans cette zone, pour obtenir un film d'épaisseur donnée et surtout de qualité acceptable.

Les articles en verre sont maintenus par une électrode, une pièce métallique, reliée à la masse de manière à ce que les charges des particules, qui se sont réparties sur la surface des articles, s'évacuent vers la masse.

Le procédé selon l'invention permet l'obtention de films de vernis très homogènes, sans apparition de coulures le long des parois des articles ni de mouchetures. Le tendu des revêtements obtenus est par conséquent de qualité très supérieure à celle du tendu des revêtements obtenus avec les procédés classiques de pulvérisation. Par ailleurs, aucune zone n'est inaccessible, les fines particules de vernis s'appliquent sans difficulté dans tous les recoins des articles se présentant sous les formes les plus complexes.

Les rendements de dépôt obtenus par ce procédé sont très significatifs et supérieurs à 85%. Les temps de réglage sont d'autre part extrêmement réduits puisqu'il suffit de fixer les articles sur un convoyeur qui se charge ensuite de les faire défiler face aux atomiseurs électrostatiques à bol tournant. On peut par ailleurs laisser les articles en position statique devant un bol ou, toujours sans les faire défiler, les soumettre à un mouvement de rotation continue ou alternative. Il apparaît que, sauf pour les formes compliquées, la distribution des lignes du champ électrostatique est telle que même derrière l'article par rapport à sa présentation face au bol, les particules se déposent. La modification de l'orientation est un perfectionnement supplémentaire.

D'autres particularités et avantages de la présente invention apparaîtront à la lecture de la description faite à titre d'exemple illustratif et non limitatif en référence aux figures annexées qui représentent :
- la figure 1, un organigramme des différentes étapes d'un procédé selon l'invention,
- la figure 2, un schéma en perspective d'un dispositif de mise en oeuvre d'un procédé selon l'invention.

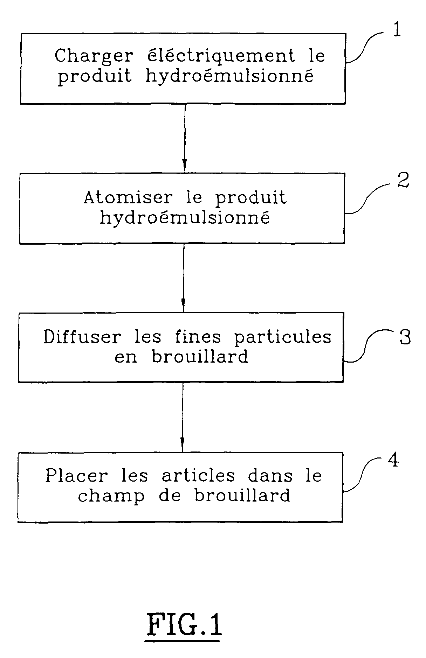

La figure 1 résume les différentes étapes d'un mode de réalisation d'un procédé selon l'invention. Une première étape 1 consiste à charger la composition de vernis ou de peinture à l'eau à un potentiel. Dans un exemple ce potentiel est négatif. Ce chargement est effectué au moyen d'un générateur haute-tension connecté à au moins un bol tournant électrostatique.

Dans une deuxième étape 2 la composition de vernis ou de peinture chargée électriquement est atomisée. Ce sont les bols tournant électrostatiques qui permettent de réaliser cette atomisation. Un bol présente en effet l'avantage d'atomiser le produit en fines particules de taille homogène. Il permet également, en particulier avec l'assistance d'un flux d'air comprimé, de diffuser les fines particules résultantes dans une large zone de manière à former un brouillard ; c'est l'étape 3. Ce flux d'air qui peut ne pas être indispensable permet de déterminer par sa force la dimension du champ de diffusion, appelé aussi "impact" et de contribuer avec la vitesse de défilement des articles à obtenir la bonne densité de particules dans le brouillard.

Enfin, la dernière étape 4 consiste à placer les articles en verre dans la zone de diffusion des particules. Le phénomène de conductibilité de surface du verre permet de répartir les particules de façon homogène à la surface des articles.

On notera que les étapes 1 et 2 et 3 sont présentées ici successivement. Elles peuvent cependant être simultanées, ou même se produire en ordre inversé.

Le procédé selon l'invention est applicable sur tous les types de verre et sur des articles présentant toutes sortes de formes plus ou moins complexes. Ces articles sont par exemple des bouteilles, carafes, flacons, pots, vases etc.

Selon une variante de réalisation, le produit à l'eau utilisé peut par exemple être une poudre d'émail hydrodispersée. Dans ce cas, la poudre hydrodispersée est appliquée sur la surface des articles en verre de la même manière que celle qui vient d'être décrite. Après l'application de cette poudre une étape supplémentaire indispensable de traitement thermique assure la liaison chimique des particules d'émail entre elles et avec le substrat verrier. Grâce à ce traitement thermique et selon la granulométrie des particules d'émail hydrodispersées d'une part et leur composition chimique d'autre part, on obtient donc soit un film brillant transparent ou opaque donnant un aspect de coloration dans la masse, soit un film mat translucide ou opaque donnant un aspect de satinage chimique ou de sablage.

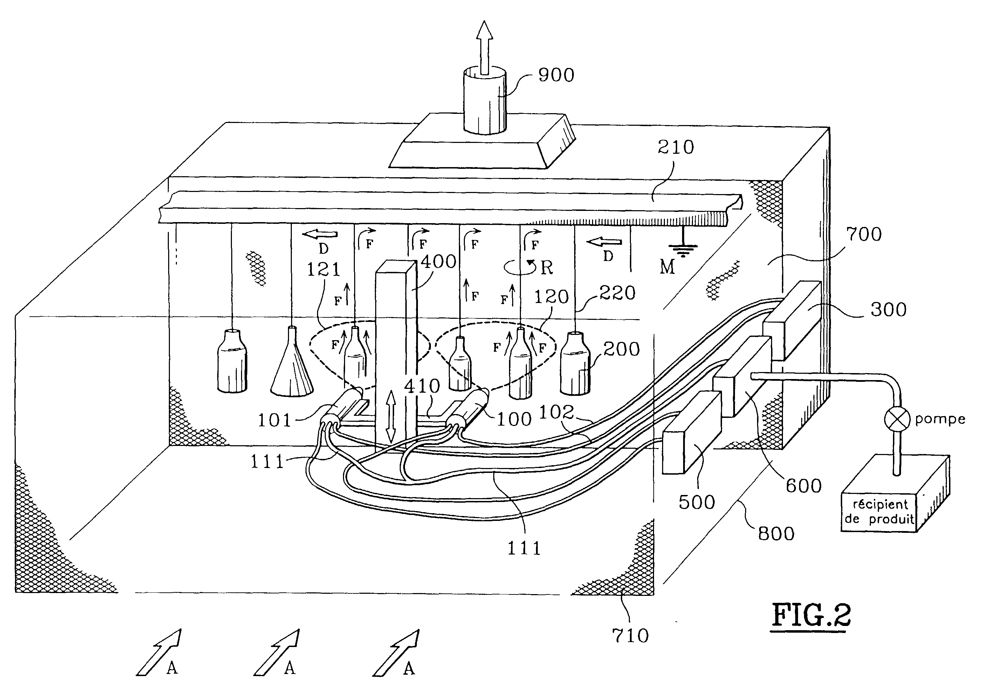

La figure 2, représente un schéma en perspective d'un dispositif de mise en oeuvre du procédé selon l'invention, sur lequel les dimensions n'ont pas été respectées afin de permettre une meilleure compréhension.

Ce dispositif est isolé, en particulier des poussières, dans une cabine 800 de peinture. Dans un exemple préféré la cabine de peinture est à filtres sec. Deux de ces filtres secs sont représentés sur la figure 2 et désignés par les références 700, 710. Le filtre 710 est destiné à filtrer l'air introduit dans la cabine selon les flèches A sur la figure 2. Cet air est constamment renouvelé à l'intérieur de la cabine, par l'intermédiaire d'une centrale, dite "MAKE UP" en littérature anglo-saxonne, aspirant l'air extérieur et le filtrant, et un système d'aspiration 900 permet de le rejeter vers l'extérieur. Le filtre 700 est destiné à récupérer sous l'effet de cet air les particules de vernis et/ou de peinture, non déposées sur les articles. Le filtre 700 est destiné à être retraité par incinération. L'intérêt d'utiliser des filtres secs au lieu de filtres humides est lié ici au faible taux des rejets. Ce qui fait que malgré son coût d'exploitation, en théorie plus important que celui concernant l'utilisation d'un filtre humide, le filtre sec est ici d'autant plus intéressant que sa saturation intervient tardivement du fait des très bons rendements de dépôts cités précédemment. De plus l'utilisation d'un tel filtre ne nécessite aucun entretien.

La référence 210 désigne un convoyeur métallique, ici aérien, relié à la masse M. D'autres types de convoyeurs peuvent être utilisés, comme par exemple un convoyeur inversé. Le convoyeur 210 comporte plusieurs pièces métalliques 220 formées chacune d'une tige conductrice et d'un embout. Chaque embout est enfoncé dans l'orifice d'un article en verre creux, tel qu'une bouteille 200 par exemple, de manière à le soutenir et à le relier à la masse M par l'intermédiaire de la tige et du convoyeur 210 métalliques. L'embout peut être un écouvillon métallique, par exemple engagé dans chaque article pour assurer son maintien. Pour éviter que l'intérieur de l'article soit pollué par le produit à l'eau, on fixe aux tiges des caches qui masquent l'orifice des articles par lequel l'embout est passé.

Dans cette description, seuls les articles en verre creux sont cités. Cependant, il est tout à fait possible d'envisager la réalisation du procédé selon l'invention sur des articles en verre plein, par exemple des bouchons en verre. Dans ce cas, les embouts, aptes à soutenir les articles, se présentent sous la forme de pinces par exemple.

Le convoyeur 210 permet de faire défiler les bouteilles 200 à une vitesse constante, de l'ordre de 4 à 8 mètres/minute par exemple. Ce défilement est schématisé par les flèches D sur la figure 2. Le convoyeur 210 permet en outre de faire tourner les tiges selon les flèches R, et par conséquent les bouteilles 200, sur elles-mêmes. La vitesse de rotation est de préférence inférieure ou égale à 60 tours/minute pour les articles qui ne sont pas de révolution par rapport à l'axe de rotation. Le critère de réglage de la vitesse consiste à essayer de faire en sorte que l'article fasse un tour sur lui même pendant la durée de son passage dans le champ de diffusion des particules de produit à l'eau. Une vitesse supérieure à 60 tours/minute risque de provoquer un effet de "ventilation" sur des objets non de révolution entraînant l'apparition de perturbations lors de l'application de la peinture et l'obtention d'un revêtement de qualité inférieure. On observe cependant que la répartition des lignes de champs électrostatiques n'est pas altérée par une telle rotation qui est bien trop lente à l'échelle de la propagation de la lumière.

Il est ainsi possible d'appliquer toutes sortes de compositions de produits à l'eau : hydroémulsionnés, hydrosolubles ou hydrodispersés voire un mélange comportant une proportion déterminée de produits appartenant à ces trois familles, l'agent émulsionné, solubilisé ou dispersé dans de l'eau étant un polymère ou un émail. Les peintures et vernis à l'eau peuvent aussi être soit bi-composant, soit mono-composant. Dans le premier cas, le durcissement du film appliqué est provoqué par la réaction chimique de deux résines (une base et un durcisseur) émulsionnées, dispersées ou solubilisées. Dans le deuxième cas, le durcissement du film appliqué est provoqué par la réticulation d'une résine unique émulsionnée, dispersée ou solubilisée.

Par ailleurs, dans tous les procédés classiques d'application de vernis et/ou de peintures sur des articles en verre, il peut être nécessaire d'appliquer, au préalable, à la surface des articles, un produit dénommé "primaire d'adhérence". Son rôle consiste à préparer la surface vitreuse avant l'application des vernis et/ou peintures à l'eau afin de garantir d'une part l'adhérence durable et homogène des revêtements, d'autre part l'emprisonnement durable dans le film des charges colorantes et pigmentaires incluses dans la composition. Cependant, ce primaire d'adhérence doit être appliqué de manière à former un film sec d'épaisseur nécessairement inférieure à 2µm car au-delà de cette épaisseur il tend à perdre ses propriétés ci-dessus mentionnées. Le film sec formé étant transparent, il ne peut être mis en évidence ni visuellement ni tactilement, si bien qu'un manipulateur a beaucoup de difficultés à garantir l'homogénéité de l'épaisseur du film appliqué selon les procédés classiques utilisant les pistolets pneumatiques.

Le procédé selon l'invention permet de résoudre ce problème de l'art antérieur puisqu'un tel primaire peut être solubilisé dans l'eau et par conséquent être appliqué de manière très homogène à la surface des articles par l'intermédiaire d'un atomiseur électrostatique à bol tournant.

Un premier mode préféré de réalisation du procédé selon l'invention consiste à introduire directement ce primaire d'adhérence concentré dans la composition finale du produit à l'eau. La préparation de la surface vitreuse et l'application du vernis ou de la peinture sont alors réalisées dans le même temps. Dans ce cas, le primaire d'adhérence est introduit dans la composition de produit à l'eau de base à raison de 1 à 5% en masse. De par sa nature chimique créant des affinités avec les surfaces vitreuses, le produit primaire d'adhérence migre spontanément vers la surface de l'article en verre, lorsque le film de peinture ou de vernis à l'eau est encore humide.

De manière avantageuse, la composition de produit à l'eau est chargée négativement puis atomisée en fines particules au moyen de deux atomiseurs électrostatiques à bols tournant 100, 101. Ces deux atomiseurs sont fixés sur un axe horizontal 410 rattaché à un appareil séquentiel à va-et-vient vertical 400. Les bols tournent à une vitesse de rotation réglable et pouvant atteindre 60000 tours/minute. De bons résultats peuvent néanmoins être obtenus à partir d'une vitesse de 30000 tours/minutes. Ainsi, grâce à leur effet centrifuge, ces bols permettent d'atomiser le produit à l'eau en fines particules de taille homogène. De plus, la rotation des bols est régulée en vitesse à une valeur constante tout au long du procédé, quelles que soient les conditions dans lesquelles le produit est injecté dans les bols. Cette régulation est commandée par un coffret pneumatique 500.

Les atomiseurs électrostatiques à bol tournant utilisés sont de préférence commercialisés sous la marque "AEROBELL" par la société américaine I.T.W. RANSBURG.

La machine à balayage vertical 400 est programmée de telle sorte que des temporisations relativement élevées soient choisies lorsque les bols 100, 101, sont face aux parties les plus complexes des articles, telles que des épaulements particulièrement plans de carafes par exemple, tandis que des temporisations moins élevées sont choisies lorsque les bols sont face à des formes plus simples, telles que le corps cylindrique d'une bouteille de champagne par exemple.

Un générateur haute-tension 300, destiné à délivrer une tension négative comprise entre 0 et 100 kilovolts, est connecté aux bols 100, 101 par l'intermédiaire de câbles à haute-tension 102. Cette tension négative permet de charger le produit à l'eau, introduit dans le conduit 110, 111 de chacun des deux atomiseurs à bol tournant 100, 101. De préférence, le produit est chargé à un potentiel compris entre -50 et -100 KV, par exemple -70 KV.

Le coffret 500 assure trois fonctions de réglage. Premièrement il permet de régler le débit de l'air qui alimente une turbine entraînant le bol. La turbine tourne d'autant plus vite que le débit d'air est élevé. Cette vitesse de rotation conditionne la taille et la vitesse des particules qui se détachent du bol. Plus la vitesse de rotation est élevée plus ces particules sont fines et plus leur énergie cinétique est importante. Deuxièmement, le coffret 500 permet de régler le débit de produit à l'eau diffusé par le bol. C'est ce débit qui doit être suffisamment faible pour l'application d'une première couche d'accrochage par un premier bol. Ceci évite de plus les phénomènes de coulure précédemment évoqués. Troisièmement, le coffret 500 permet de régler le flux d'air de la jupe qui enveloppe le bol et qui conditionne l'angle d'ouverture de diffusion du bol, c'est-à-dire le diamètre de l'impact de l'atomiseur. Plus le débit d'air de jupe est important, plus le diamètre de la zone de diffusion des particules est faible.

De préférence, le diamètre de chaque bol 100, 101 est supérieur à 30 mm, soit par exemple 57 mm. En effet, un diamètre inférieur risque de provoquer des phénomènes nuisibles de mouchetures à la surface des articles. En fait, à une vitesse de turbine fixée, plus le diamètre du bol est important, plus la vitesse le long de sa circonférence est grande et par conséquent plus l'énergie cinétique des particules augmente. L'augmentation de cette énergie cinétique va dans le sens d'un meilleur éclatement des particules et de leur répartition plus homogène à la surface des articles.

Par ailleurs, les récipients contenant les vernis et/ou peintures à l'eau sont isolés de la haute tension pour des raisons de sécurité. On utilise pour cela un système "navette" d'isolation se trouvant entre les pompes d'alimentation et les atomiseurs. Les pompes sont destinées à aspirer les produits à l'eau directement dans les récipients. L'ensemble composé du système d'isolation et des pompes est schématisé sur la figure 2 par le bloc désigné par la référence 600. Le système d'isolation utilisé est par exemple le système commercialisé sous la marque "AQUABLOCK" par la société I.T.W. RANSBURG. Les récipients sont extérieurs à la cabine. Le bloc 600 est situé contre une paroi de la cabine en regard de ces récipients qui peuvent donc être remplis sans entrer dans la cabine.

La viscosité des produits à l'eau est de préférence comprise entre 0,2 et 0,7 Poise, par exemple 0,45 Poise.

D'autre part la surface des articles en verre 200 est de préférence maintenue à une distance du bol 100, 101 qui lui fait face, comprise entre 10 et 30 cm, de préférence 20 cm, lorsque ces articles se trouvent dans l'axe de diffusion.

La distance minimale entre deux articles en verre se succédant est de l'ordre de 1 cm.

Les particules chargées négativement s'accumulent puis se répartissent à la surface d'un article en verre 200 et les charges négatives sont canalisées puis évacuées vers la masse M par l'intermédiaire de la pièce métallique 220 et du convoyeur métallique 210, tel qu'indiqué par les flèches F sur la figure 2.

Aucun phénomène de répulsion n'a lieu de la part de l'article. La conductibilité de surface de l'article nécessaire à la répartition des particules et à l'évacuation des charges négatives, qui apparaît lorsque les articles sont plongés dans la zone de diffusion de ces particules, est en fait due à l'absorption par la surface vitreuse d'une très fine pellicule d'eau, d'épaisseur microscopique, issue de l'humidité de l'air ambiant.

De préférence, la température de la surface de l'article en verre est comprise entre 15 et 30°C, afin d'éviter un séchage prématuré des particules de produit susceptible de se produire lorsque la température est trop élevée. Cette température permet donc aux particules de se lier entre elles à une vitesse raisonnable pour former un revêtement présentant un tendu de bonne qualité. Quand elle est trop basse, pour permettre un bon séchage, il suffit d'écarter un peu les bols pour mettre en place une deuxième couche dans de bonnes conditions.

La température de l'air circulant dans la cabine, quant à elle, est comprise entre 15°C et 25°C, de préférence 20°C. L'hygrométrie relative, qui contribue à l'obtention d'un film de vernis présentant un tendu de bonne qualité, est de préférence comprise entre 40 et 70%, dans un exemple elle vaut 55%. En effet, lorsque la valeur de l'hygrométrie est inférieure à 40%, les particules de produit à l'eau ont tendance à sécher avant d'atteindre la surface vitreuse et inversement, lorsque sa valeur est supérieure à 70%, les particules ont tendance à sécher difficilement après avoir atteint la surface vitreuse. La régulation du couple température-hygrométrie de l'air circulant dans la cabine est effectué dans la centrale "MAKE UP" via un brûleur veine d'air et un humidificateur.

L'utilisation d'au moins deux bols 100, 101 est avantageuse et permet d'obtenir un revêtement de meilleure qualité qu'un revêtement réalisé au moyen d'un seul bol. Les deux bols permettent d'appliquer deux couches successives de produits à l'eau. Ainsi, lorsqu'un article est plongé dans le champ d'un premier brouillard de particules 120, créé par le premier bol 100, il est recouvert d'une première couche de vernis ou peinture, puis lorsqu'il passe dans le champ d'un deuxième brouillard de particules 121, créé par le deuxième bol 101, une deuxième couche de vernis ou peinture s'applique sur la première couche encore humide.

L'obtention d'un revêtement de meilleure qualité s'explique par le fait que l'application des couches successives se fait en "mouillé sur mouillé" et évite l'apparition de défauts tels que des effets de coulures, de peau d'orange et de mouchetures. Alors que la première couche ne doit pas être trop épaisse pour les raisons évoquées ci-dessus, il est possible d'augmenter le débit de produit à l'eau du deuxième bol par rapport au débit du premier afin d'atteindre l'épaisseur voulue.

Jusqu'à présent l'utilisation de deux bols se déplaçant verticalement de manière synchronisée a été décrite, cependant il est tout à fait envisageable d'utiliser deux batteries synchronisées de plusieurs bols disposés les uns au-dessus des autres afin de créer des effets de dégradés monochromes ou bichromes sur les articles en utilisant des peintures de couleurs différentes pour chaque bol par exemple.

Un deuxième mode de réalisation du procédé selon l'invention consiste, dans le cas où le primaire d'adhérence n'est pas introduit dans la composition de vernis ou de peintures à l'eau, à l'appliquer, au préalable, sur la surface des articles en verre au moyen d'un troisième bol tournant électrostatique. Ce troisième bol, non représenté sur la figure 2, est alors fixé sur le même axe 410 que les deux autres bols 100, 101 et est entraîné dans le même mouvement vertical alternatif au moyen de l'appareil séquentiel à va-et-vient vertical 400.

De manière avantageuse, le primaire d'adhérence utilisé est un silane solubilisé dans de l'eau à raison de 1 à 5% en masse, par exemple à 2%. Il est appliqué dans des proportions identiques à celles de la composition produit à l'eau de finition. Par exemple, pour un débit global de finition comportant 40% d'extrait sec égal à 90 ml par minute, on pulvérise un primaire comportant 2% d'extrait sec à un débit de 90 ml par minute.

Dans ce cas le procédé d'application de vernis et/ou peintures s'effectue en deux temps. L'étape préalable supplémentaire consiste par conséquent à charger le primaire d'adhérence à un potentiel négatif puis à l'atomiser au moyen du troisième bol. Les fines particules résultantes de l'atomisation sont ensuite diffusées dans une large zone pour former un brouillard. Enfin, les articles en verre sont placés dans le champ de ce brouillard. Les particules se répartissent de manière homogène sur les parois des articles et créent un voile sec de silane d'épaisseur de l'ordre du micron.

La répartition des particules à la surface du verre est assurée de la même manière que précédemment décrite, c'est-à-dire que les particules s'accumulent à la surface puis se répartissent, sous l'effet de la conductibilité de surface naturelle du verre qui s'établit grâce à l'absorption par la surface vitreuse d'une très fine pellicule d'eau issue de l'air ambiant. Les charges négatives sont ensuite évacuées vers la masse via la tige 220 et le convoyeur 210 métallique.

Cette étape supplémentaire permet d'appliquer le primaire d'adhérence hydrosoluble de manière très homogène et de garantir une adhérence des vernis ou peintures, ultérieurement appliqués, de très bonne qualité.

Le primaire d'adhérence hydrosoluble utilisé peut indifféremment être soit mono-composant soit bi-composant. De préférence, les étapes successives se font en "mouillé sur mouillé", c'est-à-dire que la couche de finition, composée de vernis ou de peinture hydroémulsionnée, est appliquée alors que la couche de primaire d'adhérence préalablement appliquée n'a pas encore séchée.

De manière avantageuse, la vitesse de la turbine du troisième bol est réglée à une valeur pouvant atteindre de 30000 à 60000 tours/minute.

Bien sûr, le dispositif de mise en oeuvre peut comprendre plus de trois bols. Il peut par exemple comporter trois postes d'application réservés chacun respectivement à l'application du primaire d'adhérence, à l'application en deux couches successives de la finition mettant en jeu deux teintes pour réaliser des effets de dégradés de couleur en utilisant par exemple une couleur différente pour chaque bol.

De manière avantageuse, les deux bols 100 et 101 sont distants l'un de l'autre d'une valeur telle que tout risque de recouvrement des zones de diffusion respectives 120, 121, apte à créer des perturbations, soit écarté. Par conséquent la distance minimale séparant deux bols est égale à la valeur maximale du diamètre de la zone de diffusion de chacun de ces bols. Ainsi, pour des bols possédant des turbines de 57mm, la distance séparant les deux bols est au moins égale à 700mm quand le champ de diffusion est le plus large.

Bien sûr cette distance minimale vaut également dans le cas où un troisième bol est utilisé pour appliquer le primaire d'adhérence avant la finition.

L'épaisseur du revêtement obtenu dépend de la durée d'application des particules sur la surface d'un article en verre et de la densité des particules.

Dans l'exemple préféré on peut produire, en une heure, 3000 bouteilles de champagne revêtues d'un revêtement sec d'épaisseur de l'ordre de 20µm.

Le procédé selon l'invention permet l'obtention de films de vernis très homogènes, sans apparition de coulures le long des parois des articles ni d'effets de peau d'orange et de mouchetures. Le tendu des revêtements obtenus est d'une qualité supérieure à celle obtenue à partir des procédés classiques de pulvérisation et les produits s'appliquent sans difficulté dans les recoins des articles ayant les formes les plus complexes.

Les coefficients de transfert des vernis et/ou peinture obtenus par ce procédé sont très significatifs puisqu'ils sont supérieurs à 70% quelle que soit la forme des articles et peuvent dépasser 85% pour des articles de formes simples tels les bouteilles de champagne.

Ces rendements étant élevés, la production de déchets est diminuée en proportion et les filtres secs sont changés et retraités moins souvent que dans les procédés classiques si bien que les coûts d'exploitation sont considérablement amoindris.

Les produits à l'eau utilisés ne sont en outre pas dangereux puisque leur point éclair est supérieur à 100°C si bien que tout risque d'inflammation ou d'explosion est écarté. Ils ne sont pas non plus odorants si bien qu'ils n'incommodent pas le public. De plus ces produits sont généralement moins coûteux que des produits homologues solvantés.

Enfin, grâce à ce procédé il est possible d'obtenir, à partir d'articles en verre incolores, des surfaces vitreuses présentant divers aspects selon les charges que l'on mélange avec les résines contenues dans les compositions de produits à l'eau utilisées. Ainsi, l'ajout de colorants transparents ou de pigments va conférer au revêtement la propriété d'imiter respectivement la coloration du verre dans la masse ou son émaillage. L'ajout supplémentaire de charges matantes, telles que des microbilles de silice, de verre, de polyéthylène par exemple, crée un effet dépoli plus ou moins brillant pour imiter le satinage chimique. Enfin, l'inclusion de charges filtrant les ultra-violets permet de protéger certains contenus particulièrement sensibles tels que les vins fins dans le cade de l'emballage alimentaire.

## Revendications

1. Procédé d'application de produit à l'eau sur des articles en verre, comportant des étapes pour :
- charger une composition de ce produit à l'eau à un potentiel d'une polarité donnée,
- atomiser la composition de ce produit à l'eau et diffuser les particules résultantes dans une large zone de manière à former un brouillard (120, 121),
- placer les articles en verre (200) au contact d'une électrode à un potentiel d'une autre polarité donnée, et maintenir leur surface à une température comprise entre 15°C et 30°C,
- et amener les articles en verre dans le champ de ce brouillard.

2. Procédé selon la revendication 1, **caractérisé en ce que** la composition de produit à l'eau est atomisé en fines particules au moyen d'au moins un atomiseur électrostatique (100, 101) à bol tournant à une vitesse réglable.

3. Procédé selon les revendications 1 ou 2, **caractérisé en ce que**, selon la dimension des particules de matériaux en suspension dans l'eau, le produit à l'eau est un vernis à l'eau hydroémulsionné.

4. Procédé selon les revendications 1 ou 2, **caractérisé en ce que**, selon la dimension des particules de matériaux en suspension dans l'eau, le produit à l'eau est un vernis à l'eau hydrodispersé.

5. Procédé selon les revendications 1 ou 2, **caractérisé en ce que**, selon la dimension des particules de matériaux en suspension dans l'eau, le produit à l'eau est un vernis à l'eau hydrosoluble.

6. Procédé selon l'une des revendications 1 ou 2, **caractérisé en ce que** le produit à l'eau est un mélange comportant une proportion déterminée de produits hydroémulsionnés, de produits hydrosolubles et de produits hydrodispersés.

7. Procédé selon l'une des revendications 1 ou 2, **caractérisé en ce que**, le produit à l'eau est une poudre d'émail hydrodispersée.

8. Procédé selon la revendication 1, 2 ou 7, **caractérisé en ce qu'**une étape supplémentaire de traitement thermique assure la liaison chimique des particules d'émail entre elles et avec le verre, afin que, grâce audit traitement thermique et selon la granulométrie des particules d'émail hydrodispersées d'une part et leur composition chimique d'autre part, on obtienne soit un film brillant transparent donnant un aspect de coloration dans la masse, soit un film mat translucide ou opaque donnant un aspect de satinage chimique ou de sablage.

9. Procédé selon l'une des revendications 1 à 8, **caractérisé en ce que** la composition du produit à l'eau comporte une quantité de co-solvants organiques inférieure à 10% en masse, de préférence inférieure à 5% en masse, et une teneur en extrait sec comprise entre 30 et 50% en masse.

10. Procédé selon l'une des revendications 1 à 9, **caractérisé en ce qu'**il comporte une étape pour que
- les articles en verre (200) soient maintenus par une électrode métallique (220) reliée à une masse (M) de manière à ce que des charges électriques de particules, qui se sont réparties à la surface des articles, s'évacuent vers la masse (M).

11. Procédé selon l'une des revendications 1 à 10, **caractérisé en ce qu'**il comporte une étape pour
- introduire un primaire d'adhérence dans la composition du produit à l'eau.

12. Procédé selon l'une des revendications 1 à 10, **caractérisé en ce qu'**il comporte une étape pour
- appliquer au préalable, sur la surface des articles en verre, un primaire d'adhérence solubilisé dans de l'eau, lorsque la composition de produit à l'eau n'en comporte pas, et **en ce que** pour cela :
- le primaire d'adhérence est appliqué comme le produit à l'eau.

13. Procédé selon l'une des revendications 10 à 12, **caractérisé en ce que**
- le primaire d'adhérence hydrosoluble est atomisé en fines particules au moyen d'un autre bol tournant électrostatique exerçant son action avant l'application du produit, peinture ou vernis à l'eau.

14. Procédé selon l'une des revendications 1 ou 13, **caractérisé en ce que**
- la composition de produit à l'eau et ou un primaire d'adhérence sont chargés à un potentiel négatif compris entre -50 Kilovolts et -100 Kilovolts, de préférence -70 Kilovolts.

15. Procédé selon l'une des revendications 1 à 14, **caractérisé en ce que**
- la viscosité de la composition du produit hydroémulsionné est comprise entre 0,2 et 0,7 Poise, de préférence 0,45 Poise.

16. Procédé selon l'une des revendications 1 à 15, **caractérisé en ce que**
- la distance entre la surface d'un article en verre et un bol tournant électrostatique est comprise entre 10 et 30 cm, de préférence 20cm.

17. Procédé selon l'une des revendications 1 à 16, **caractérisé en ce que** l'hygrométrie relative de l'air ambiant est comprise entre 40 et 70%, et que de préférence elle vaut 55%.

18. Procédé selon l'une des revendications 1 à 17, **caractérisé en ce que** la température ambiante est réglée entre 15° et 25° de préférence 20°.

19. Procédé selon l'une des revendications 1 à 18, **caractérisé en ce que**
- les articles en verre défilent à vitesse constante devant les bols et tournent sur eux-mêmes à une vitesse inférieure ou égale à 60 Tours/minute.

20. Procédé selon l'une des revendications 1 à 19, **caractérisé en ce que**
- les articles en verre sont de révolution, défilent à vitesse constante devant les bols, et tournent sur eux-mêmes à une vitesse supérieure ou égale à 60 Tours/minute.

21. Procédé selon l'une des revendications 1 à 20, **caractérisé en ce que**
- on règle la distance entre deux bols tournant électrostatiques (100, 101) de façon à ce qu'elle soit supérieure ou égale à la valeur du diamètre d'une zone de diffusion (120, 121) des particules.

22. Procédé selon l'une des revendications 1 à 21, **caractérisé en ce que**
- on enveloppe le champ de diffusion des particules avec une jupe d'air à flux réglable.

23. Dispositif de mise en oeuvre d'un procédé selon l'une des revendications 1 à 22, **caractérisé en ce qu'**il est isolé dans une cabine (800) à filtres sec et **en ce qu'**il comprend :
- une machine à balayage vertical (400), sur laquelle est fixé au moins un bol tournant électrostatique (100, 101) apte à atomiser le produit à l'eau,
- un convoyeur métallique (210) relié à une masse (M), comportant au moins une tige métallique (220) à l'extrémité de laquelle est placé un embout métallique apte à maintenir un article en verre (200), et destiné à faire défiler les articles en verre en face des deux bols,
- un générateur de haute tension (300) connecté aux bols (100, 101) et à la masse et apte à leur délivrer une polarité élevée par rapport à celle-ci,
- un coffret pneumatique (500) apte à gérer les paramètres de chaque bol,
- un système d'isolation (600) des produits à l'eau chargés électriquement relié au dispositif de pompage des produits de leur récipient.

## Claims

1. Process for application of water-based product on glass articles, comprising steps to:
- charge a composition of this water-based product with a potential with a given polarity,
- atomise the composition of this water-based product and diffuse the resulting particles in a wide zone so as to form a mist (120, 121),
- place the glass articles (200) in contact with an electrode with a potential of a given other polarity, and maintain their surface at a temperature lying between 15°C and 30°C,
- and bring the glass articles into the field of this mist.

2. Process according to claim 1, **characterised in that** the composition of water-based product is atomised into fine particles by means of at least one electrostatic atomiser (100, 101) with a bowl turning at a variable speed.

3. Process according to claims 1 or 2, **characterised in that** depending on the size of the particles of materials in suspension in the water, the water-based product is a hydro-emulsified water-based lacquer.

4. Process according to claims 1 or 2, **characterised in that** depending on the size of the particles of materials in suspension in the water, the water-based product is a hydro-dispersed water-based lacquer.

5. Process according to claims 1 or 2, **characterised in that** depending on the size of the particles of materials in suspension in the water, the water-based product is a hydro-soluble water-based lacquer.

6. Process according to one of claims 1 or 2, **characterised in that** the water-based product is a mixture comprising a given proportion of hydro-emulsified products, hydro-soluble products and hydro-dispersed products.

7. Process according to one of claims 1 or 2, **characterised in that** the water-based product is a hydro-dispersed enamel powder.

8. Process according to claim 1, 2 or 7, **characterised in that** an additional heat treatment step provides the chemical link between the particles of enamel themselves and the glass, so that, thanks to said heat treatment and depending on the grain size of the hydro-dispersed particles of enamel on the one hand and their chemical composition on the other hand, the result obtained is either a transparent gloss film giving a coloured appearance in the material, or a translucid or opaque matt film giving a chemically etched or sanded appearance.

9. Process according to one of claims 1 to 8, **characterised in that** the composition of the water-based product comprises a quantity of organic co-solvents of less than 10% by weight, preferably less than 5% by weight, and a dry extract content of between 30 and 50% by weight.

10. Process according to one of claims 1 to 9, **characterised in that** it comprises a step to ensure that
- the articles of glass (200) are held by a metal electrode (220) connected to an earth (M) so that electrical charges of particles which are distributed on the surface of the articles, are discharged to the earth (M).

11. Process according to one of claims 1 to 10, **characterised in that** it comprises a step to
- introduce an adhesion-promoting primer in the composition of the water-based product.

12. Process according to one of claims 1 to 10, **characterised in that** it comprises a step to
- apply an adhesion-promoting primer solubilised in water on the surface of the glass articles first when the composition of water-based product does not contain any, and **in that** for this purpose:
- the adhesion-promoting primer is applied like the water-based product.

13. Process according to one of claims 10 to 12, **characterised in that**
- the hydro-soluble adhesion-promoting primer is atomised into fine particles by means of another electrostatic revolving bowl having its action before the application of the water-based product, paint or lacquer.

14. Process according to one of claims 1 or 13, **characterised in that**
- the composition of water-based product and/or an adhesion-promoting primer are charged with a negative potential of between -50 kilovolts and -100 kilovolts, preferably -70 kilovolts.

15. Process according to one of claims 1 to 14, **characterised in that**
- the viscosity of the composition of the hydro-emulsified product is between 0.2 and 0.7 Poise, preferably 0.45 Poise.

16. Process according to one of claims 1 to 15, **characterised in that**
- the distance between the surface of a glass article and an electrostatic revolving bowl is between 10 and 30 cm, preferably 20 cm.

17. Process according to one of claims 1 to 16, **characterised in that** the relative humidity of the ambient air is between 40 and 70%, and is preferably 55%.

18. Process according to one of claims 1 to 17, **characterised in that** the ambient temperature is set to between 15° and 25°, preferably 20°.

19. Process according to one of claims 1 to 18, **characterised in that**
- the glass articles pass before the bowls at a constant speed and turn on their own axis at a speed less than or equal to 60 revolutions per minute.

20. Process according to one of claims 1 to 19, **characterised in that**
- the glass articles revolve, pass before the bowls at a constant speed and turn about their own axis at a speed greater than or equal to 60 revolutions per minute.

21. Process according to one of claims 1 to 20, **characterised in that**
- the distance between two electrostatic revolving bowls (100, 101) is set so that it is greater than or equal to the value of the diameter of a diffusion zone (120, 121) of the particles.

22. Process according to one of claims 1 to 21, **characterised in that**
- the field of diffusion of the particles is enveloped with a variable-flow air skirt.

23. Device for implementing a process according to one of claims 1 to 22, **characterised in that** it is insulated in a dry filter booth (800) and **in that** it comprises:
- a vertically sweeping machine (400) on which is fixed at least one electrostatic revolving bowl (100, 101) suitable for atomising the water-based product,
- a metal conveyor (210) connected to an earth (M), comprising at least one metal rod (220) at the end of which is placed a metal end piece suitable for holding a glass article (200), and designed to pass the glass articles before the two bowls,
- a high-voltage generator (300) connected to the bowls (100, 101) and to the earth and suitable for supplying them with a high polarity in relation to the latter,
- an air chest (500) suitable for controlling the parameters of each bowl,
- an insulation system (600) for the electrically charged water-based products connected to the device for pumping the products from their container.

## Patentansprüche

1. Verfahren zum Aufbringen eines wässrigen Produkts auf Glasartikel, das Schritte aufweist, um
- eine Zusammensetzung dieses wässrigen Produkts mit einem Potential einer gegebenen Vorspannung zu laden,
- die Zusammensetzung dieses wässrigen Produkts zu zerstäuben und die daraus entstehenden Teilchen in einem großen Bereich so zu zerstreuen, daß sie einen Nebel bilden (120, 121),
- die Glasartikel (200) mit einer Elektrode in Kontakt zu bringen, deren Potential eine andere gegebene Vorspannung hat, und ihre Oberfläche auf einer Temperatur zwischen 15 °C und 30 °C zu halten,
- und die Glasartikel in das Feld dieses Nebels zu bringen.

2. Verfahren nach Anspruch 1, **dadurch gekennzeichnet, daß** die Zusammensetzung aus wässrigem Produkt mittels mindestens einer elektrostatischen Drehschüssel-Zerstäubervorrichtung (100, 101) mit einstellbarer Drehgeschwindigkeit in feine Teilchen zerstäubt wird.

3. Verfahren nach den Ansprüchen 1 oder 2, **dadurch gekennzeichnet, daß** je nach der Größe der im Wasser suspendierten Stoffteilchen das wässrige Produkt ein hydroemulgierter, wässriger Lack ist.

4. Verfahren nach den Ansprüchen 1 oder 2, **dadurch gekennzeichnet, daß** je nach der Größe der im Wasser suspendierten Stoffteilchen das wässrige Produkt ein hydrodispergierter, wässriger Lack ist.

5. Verfahren nach den Ansprüchen 1 oder 2, **dadurch gekennzeichnet, daß** je nach der Größe der im Wasser suspendierten Stoffteilchen das wässrige Produkt ein wasserlöslicher, wässriger Lack ist.

6. Verfahren nach einem der Ansprüche 1 oder 2, **dadurch gekennzeichnet, daß** das wässrige Produkt eine Mischung ist, die einen bestimmten Anteil von hydroemulgierten Produkten, von wasserlöslichen Produkten und von hydrodispergierten Produkten aufweist.

7. Verfahren nach einem der Ansprüche 1 oder 2, **dadurch gekennzeichnet, daß** das wässrige Produkt ein hydrodispergiertes Emaillepulver ist.

8. Verfahren nach den Ansprüchen 1, 2 oder 7, **dadurch gekennzeichnet, daß** ein zusätzlicher Schritt der Wärmebehandlung die chemische Verbindung der Emailleteilchen untereinander und mit dem Glas gewährleistet, damit aufgrund der Wärmebehandlung und gemäß der Körnchengröße der hydrodispergierten Emailleteilchen einerseits und ihrer chemischen Zusammensetzung andererseits entweder ein glänzender transparenter Film, der in der Masse einen Färbungseffekt ergibt, oder ein matter, durchscheinender oder undurchsichtiger Film erhalten wird, der einen chemischen Satinierungseffekt oder einen sandgestrahlten Effekt ergibt.

9. Verfahren nach einem der Ansprüche 1 bis 8, **dadurch gekennzeichnet, daß** die Zusammensetzung des wässrigen Produkts eine Menge von organischen Zusatz-Lösungsmitteln von weniger als 10 Masseprozent, vorzugsweise weniger als 5 Masseprozent und einen Gehalt an Trockenextrakt aufweist, der zwischen 30 und 50 Masseprozent liegt.

10. Verfahren nach einem der Ansprüche 1 bis 9, **dadurch gekennzeichnet, daß** es einen Schritt aufweist, damit
- die Glasartikel (200) von einer Metallelektrode (220) gehalten werden, die mit einer Masse (M) verbunden ist, um elektrische Ladungen von Teilchen, die sich an der Oberfläche der Artikel verteilt haben, zur Masse (M) hin zu evakuieren.

11. Verfahren nach einem der Ansprüche 1 bis 10, **dadurch gekennzeichnet, daß** es einen Schritt aufweist, um
- eine Haftungsgrundierung in die Zusammensetzung des wässrigen Produkts einzuführen.

12. Verfahren nach einem der Ansprüche 1 bis 10, **dadurch gekennzeichnet, daß** es einen Schritt aufweist, um
- vorher auf die Oberfläche der Glasartikel eine in Wasser gelöste Haftungsgrundierung aufzubringen, wenn die Zusammensetzung des wässrigem Produkts keine solche aufweist, und daß hierzu
- die Haftungsgrundierung wie das wässrige Produkt aufgebracht wird.

13. Verfahren nach einem der Ansprüche 10 bis 12, **dadurch gekennzeichnet, daß**
- die wasserlösliche Haftungsgrundierung mittels einer weiteren elektrostatischen Drehschüssel in feine Teilchen zerstäubt wird, die ihre Wirkung vor dem Auftragen des Produkts, wässriger Farbe oder wässrigem Lack, ausübt.

14. Verfahren nach einem der Ansprüche 1 oder 13, **dadurch gekennzeichnet, daß**
- die Zusammensetzung aus wässrigem Produkt und/oder eine Haftungsgrundierung auf ein negatives Potential geladen werden, das zwischen -50 kV und -100 kV, vorzugsweise auf -70 kV liegt.

15. Verfahren nach einem der Ansprüche 1 bis 14, **dadurch gekennzeichnet, daß**
- die Viskosität der Zusammensetzung des hydroemulgierten Produkts zwischen 0,2 und 0,7 Poise, vorzugsweise bei 0,45 Poise liegt.

16. Verfahren nach einem der Ansprüche 1 bis 15, **dadurch gekennzeichnet, daß**
- der Abstand zwischen der Oberfläche eines Glasartikels und einer elektrostatischen Drehschüssel zwischen 10 und 30 cm, vorzugsweise bei 20 cm liegt.

17. Verfahren nach einem der Ansprüche 1 bis 16, **dadurch gekennzeichnet, daß** die relative Luftfeuchtigkeit der Umgebungsluft zwischen 40 und 70 % liegt und vorzugsweise 55 % beträgt.

18. Verfahren nach einem der Ansprüche 1 bis 17, **dadurch gekennzeichnet, daß** die Umgebungstemperatur zwischen 15 °C und 25 °C, und vorzugsweise auf 20 °C eingestellt ist.

19. Verfahren nach einem der Ansprüche 1 bis 18, **dadurch gekennzeichnet, daß**
- die Glasartikel mit konstanter Geschwindigkeit vor den Drehschüsseln vorbeilaufen und sich mit einer Geschwindigkeit von höchstens 60 Umdrehungen pro Minute um sich selbst drehen.

20. Verfahren nach einem der Ansprüche 1 bis 19, **dadurch gekennzeichnet, daß**
- die Glasartikel drehsymmetrisch sind, mit konstanter Geschwindigkeit vor den Drehschüsseln vorbeilaufen und sich mit einer Geschwindigkeit von mindestens 60 Umdrehungen pro Minute um sich selbst drehen.

21. Verfahren nach einem der Ansprüche 1 bis 20, **dadurch gekennzeichnet, daß**
- der Abstand zwischen zwei elektrostatischen Drehschüsseln (100, 101) so eingestellt wird, daß er mindestens gleich dem Wert des Durchmessers einer Diffusionszone (120, 121) der Teilchen ist.

22. Verfahren nach einem der Ansprüche 1 bis 21, **dadurch gekennzeichnet, daß**
- das Diffusionsfeld der Teilchen von einer Luftschürze mit einstellbarem Luftstrom umgeben ist.

23. Vorrichtung zur Anwendung eines Verfahrens nach einem der Ansprüche 1 bis 22, **dadurch gekennzeichnet, daß** sie in einer Kabine (800) mit Trockenfiltern isoliert ist und aufweist:
- eine Maschine zum senkrechten Überstreichen (400), an der mindestens eine elektrostatische Drehschüssel (100, 101) befestigt ist, die das wässrige Produkt zerstäuben kann,
- ein metallisches Förderband (210), das mit einer Masse (M) verbunden ist, mindestens einen Metallstab (220) aufweist, an dessen Ende ein Metallansatzstück angeordnet ist, das einen Glasartikel (200) halten kann, und dazu bestimmt ist, die Glasartikel vor den beiden Drehschüsseln vorbeizuführen,
- einen Hochspannungsgenerator (300), der mit den Drehschüsseln (100, 101) und mit Masse verbunden ist, um ihnen in bezug auf die Masse eine hohe Vorspannung zu verleihen,
- ein Druckluft-Gehäuse (500), das die Parameter jeder Drehschüssel steuern kann,
- ein System (600) zur Isolierung der elektrisch geladenen wässrigen Produkte, das mit der Vorrichtung zum Pumpen der Produkte aus ihrem Behälter verbunden ist.
